(19) Europäisches Patentamt
European Patent Office
Office européen des brevets

(11) **EP 1 748 219 B1**

(12) **EUROPEAN PATENT SPECIFICATION**

(45) Date of publication and mention
of the grant of the patent:
**25.12.2013 Bulletin 2013/52**

(51) Int Cl.:
*F16G 5/16* *(2006.01)*

(21) Application number: **06015763.3**

(22) Date of filing: **28.07.2006**

(54) **Drive belt**

Treibriemen

Courroie de transmission

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.07.2005 PCT/NL2005/000563**

(43) Date of publication of application:
**31.01.2007 Bulletin 2007/05**

(73) Proprietor: **ROBERT BOSCH GMBH**
**70442 Stuttgart (DE)**

(72) Inventor: **Van der Meer, Cornelis Johannes Maria**
**5032 XG Tilburg (NL)**

(74) Representative: **Plevier, Gabriel Anton Johan Maria**
**Bosch Transmission Technology B.V.**
**PO Box 500**
**5000 AM Tilburg (NL)**

(56) References cited:
**EP-A- 1 179 690      EP-A1- 1 184 591**
**US-A1- 2004 127 319**

**Description**

The present invention relates to a drive belt according to the preamble of claim 1. Drive belts of the present type are generally known through their application in continuously variable transmissions intended for the transmission of mechanical power at continuously variable speed and torque ratios between an engine and a load in particular for automotive purposes. Such drive belts are also known from the European patent application EP-A-1.111.271. The known drive belt generally comprises an endless carrier and an array of several hundred transverse elements oriented mutually parallel transversely to a longitudinal direction of the drive belt, whereby the carrier is provided in a slot of the elements such that the elements may freely slide along the band in the longitudinal direction thereof. Typically, the carrier consists of two laminated sets of a number of concentrically stacked relatively thin continuous bands. Through this measure, the carrier may have a considerable tensile strength, whereas it is still relatively easily bendable in its longitudinal direction.

In the continuously variable transmissions the belt rotationally connects two pulleys, each having two essentially conically shaped pulley discs that define a V-groove of variable width, where between a longitudinally curved section of the drive belt is located. The posture of the belt in such transmission thus includes two longitudinally straight trajectory parts where it crosses over from one pulley to the other and two longitudinally bent trajectory parts where it runs between the discs of a pulley at a respective radius of curvature for each of said two pulleys, which radii define the geometric transmission ratio of the transmission.

The pulley discs exert a clamping force on the transverse elements of the belt, which force, on the one hand, enables torque transmission through friction between the respective pulley and the drive belt and, on the other hand, urges the transverse elements radially outward with respect to the axis of rotation of the respective pulley. The actual radial movement of the transverse elements is limited by the carrier, so that the clamping force is transmitted by the transverse elements to the carrier via a normal force there between. The carrier is thereby put under tension enabling torque transmission from a drive pulley to a driven pulley by means of the cross elements pushing each other forward along the circumference of the carrier, while being supported and guided thereby. On the other side of the drive belt, the transverse elements are returned from the driven pulley back to the drive pulley, however at a much lower, possibly even zero, pushing force existing there between.

It is common practice that the combined thickness of the transverse elements of the belt is slightly smaller than the circumference of the carrier, such that a gap exists in longitudinal direction between at least two adjacent transverse elements, a/o for allowing the drive belt to be assembled without difficulty. This gap is denoted the belt's longitudinal clearance, which is defined and may be measured by placing the belt in a circular posture and sliding two adjacent elements thereof apart, i.e. in mutually opposite longitudinal directions along the circumference of the carrier, until all of the transverse elements of the belt are mutually abutting in a continuous array. The gap thus formed between the two adjacent elements defines the so-called static longitudinal belt clearance. Hereby, it is remarked that in the transmission the actual or dynamic clearance in longitudinal direction between the elements varies in dependency on the exact posture of the belt, i.e. on the geometric transmission ratio, as well as the load applied thereto. Moreover, the static clearance tends to increase over time, due to wear of the transverse elements during operation of the transmission.

Although it greatly facilitates belt assembly, it has also been recognised in the art that longitudinal belt clearance has an adverse effect on transmission efficiency, which may be understood as follows. When entering the drive pulley the transverse elements have to overcome some resistance before they are taken up by said drive pulley, i.e. they have to be actively pushed between the discs the drive pulley, due to the interplay of forces in the transmission. Moreover, once such elements arrive into frictional contact with the drive pulley they are accelerated forward by the rotation thereof. By these two effects the dynamic clearance tends to accumulate in a first or entry part of the belt's longitudinally bent trajectory on the drive pulley. This means that only a part of this bent trajectory is available for the build-up of a pushing force between the elements, which latter, second part is denoted the active part of this bent trajectory wherein the elements are mutually abutting. In such active part the transverse elements are slipping backwards relative to the rotation of the drive pulley, whereby the clearance between adjacent elements accumulated in the entry part is removed. However, by such slipping, energy is dissipated and transmission efficiency is adversely affected.

EP-A-1.179.690 discloses a drive belt according to the preamble of claim 1.

It is an object of the invention to improve the efficiency of the transmission and, more in particular, to mitigate the above-mentioned adverse effects of the longitudinal belt clearance.

Obviously, such object could in principle be realised by reducing the amount of static clearance, which has already been suggested in art, e.g. JP-A-63/266247 and WO-A-98/04847. This solution, however, may not be favoured because of the problems that may be encountered at assembly of such a belt.

According to the present invention the above object may alternatively be realised by applying the drive belt according to claim 1, favourably without placing any special requirement on the amount of longitudinal belt clearance.

By applying the claimed measure it is effected that in the straight trajectory parts of the belt the carrier wedges, at least to a certain extent, between the upper and lower parts of the transverse elements. It is believed that in particular on a slack part of the belt's trajectory, i.e. that straight trajectory part wherein the elements are returned from the driven pulley back to the drive pulley, this latter feature assists in transporting forwards in the direction of rotation the transverse elements by accelerating them through friction with the carrier as they leave the driven pulley, because at that location the longitudinal speed of the carrier exceeds that of the elements. As a result, the dynamic clearance will be at least partly located on the said slack trajectory part near the driven pulley and the clearance between the transverse elements in the entry part of the drive pulley is favourably reduced thereby. In the, at least theoretically, most extreme situation the transverse elements are accelerated away from the driven pulley to such an extent that the entire dynamic clearance is located between the elements that are just leaving the driven pulley.

An important enabling aspect underlying the present invention is that in the contemporary drive belt design according to EP-A-1.111.271 the continuous bands of the carrier do not have an exactly rectangular cross section, but rather they are crosswise provided with a curved, arc shape as seen in such cross section of the bands, at least when they are brought in a longitudinally straightened posture. The radius of the arc shape in such longitudinally straightened posture is referred to as the crowning radius Rcr. By this crowning radius Rcr the effective thickness of an individual band of the carrier, i.e. its dimension in radial direction relative to the drive belt, and thus also the effective thickness of the carrier as a whole $Tc_{EFF}$ is more than the thickness of the band as such or, respectively than the combined thickness Tc of all of the bands applied in the carrier. Hereby, the effective thickness of the carrier $Tc_{EFF}$ may be approximated by the following equation:

$$Tc_{EFF} = Tc + Rcr - \tfrac{1}{2} \cdot \sqrt{4 \cdot Rcr^2 - B^2} \qquad (1)$$

In the above equation (1), $Tc_{EFF}$ is the effective thickness of the carrier, Tc is the nominal thickness of the carrier, which is determined by the thickness of the individual bands and the number of bands applied in the carrier, Rcr is the crowning radius of the bands and B is the (axial) breadth of the bands.

Thus, in a first detailed embodiment of the drive belt according to the invention a separation between the upper and lower parts of the transverse element, i.e. a radial height Sh of the carrier receiving slot is set smaller effective thickness of the carrier $Tc_{EFF}$ determined in accordance with equation (1), i.e.:

$$Tc < Sh < Tc_{EFF} \qquad (2)$$

In such a design of the drive belt the desired wedging of the carrier in the carrier receiving slot of the transverse elements is realised. Of course, such wedging effect improves as the slot difference between the slot height Sh and the effective thickness $Tc_{EFF}$ of the carrier becomes larger. At the same time, however, also the play between the transverse elements and the carrier in the longitudinally bent parts of the belt will be reduced, hampering belt assembly. According to the invention an optimum between these two aspects of the belt's design is found by designing the slot height Sh in accordance with the equation:

$$Sh \approx Tc + \tfrac{1}{2} \cdot (Rcr - \tfrac{1}{2} \cdot \sqrt{4 \cdot Rcr^2 - B^2}) \qquad (3)$$

It is remarked that from a practical point of view the production variance in the slot height Sh, which results from the fabrication process employed, can be taken into account. To reliably ensure that the wedging effect is sufficiently effective, the criterion of equation (2) must indeed be satisfied for practically all (i.e. >95%, preferably >99%) of the transverse elements of the belt.

Further, it is remarked that the equations (1) and (3) above describe a theoretical circumstance wherein the crowning radius Rcr is exactly the same for all bands of the carrier. In practice also the crowning radius Rcr is subject to a variance such that the effective thickness $Tc_{EFF}$ of the carrier is determined by the accumulated effect of the crowing of the bands applied therein.

Further according to the present invention, the above-mentioned wedging of the carrier in the carrier receiving slot of the elements may be improved by increasing the surface roughness of the transverse elements and/or of the carrier, thereby creating  more friction there between. However, from the standpoint of transmission efficiency such is in principle not preferred as a greater friction force generally also means a greater efficiency loss due to the dissipation of mechanical energy as heat.

Therefore, in a more detailed embodiment of the invention, it is specifically a radially outwardly oriented surface of the carrier that is provided with an increased surface roughness relative to the surface roughness of a radially inwardly oriented surface of the carrier and/or a radially inwardly oriented surface of the upper part of the transverse element at the location of the carrier receiving slot that is provided with an increased surface roughness relative to the surface roughness of a radially outwardly oriented surface of the lower part of the transverse element at the location of the carrier receiving slot. In case of the latter radially outwardly oriented surface, also its surface roughness at the location of its lateral sides may exceed that of the central parts thereof, since the carrier contacts the elements specifically at such lateral sides of the said latter surface in the straight trajectory parts of the belt due to its crowned shape. By these measures it is favourably realised that the said wedging effect is improved, while at the same time the frictional contact under the influence of the above-mentioned normal force between the carrier and the lower part of the element is not adversely affected.

The above and other aspects of the invention, which will become apparent from the detailed description below, are illustrated in the accompanying drawings, in which:

Figure 1 is a schematic depiction drawn in perspective of a transmission wherein the drive belt according to the invention is used;

Figure 2 is a cross section of the drive belt;

Figure 3 schematically indicates the feature of static longitudinal belt clearance;

Figure 4 is a schematic depiction of a cross-section of the figure 1 transmission in operation, indicating the feature of dynamic longitudinal belt clearance;

Figure 5 is a cross section of the drive belt in accordance with the present invention in a straight trajectory part thereof in between the transmission pulleys;

Figure 6 is an enlargement of a part of figure 5;

Figure 7 is a schematic depiction of a cross-section of a transmission provided with the drive belt of figure 6 in operation; and

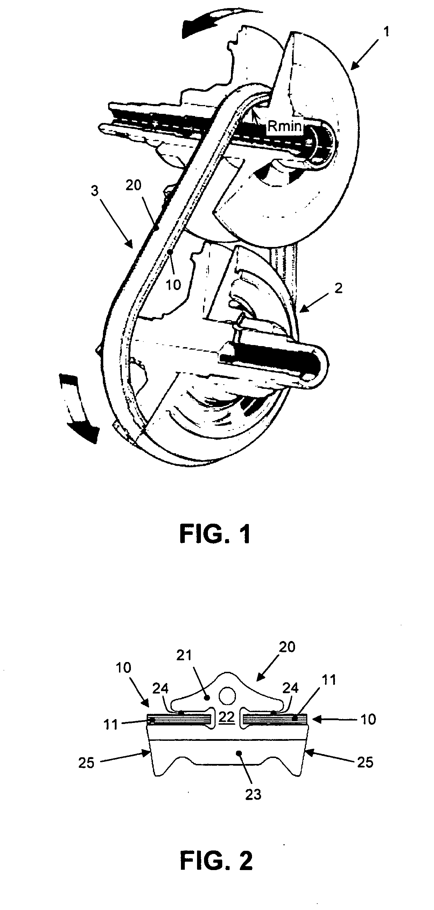

Figure 1 is a schematic depiction drawn in perspective of a transmission wherein the drive belt 3 according to the invention is used, which comprises a number of transverse elements 20 that are mounted on an endless carrier 10 such that the elements 20 can slide over the carrier 10 along its longitudinal direction. The transmission comprises two pulleys 1 and 2 that each define a tapered groove of variable width, wherein a longitudinally bent part of a drive belt 3 is mounted. In the figure the drive belt 3 is the most tightly bent in the first pulley 1, i.e. bent at a minimum radius of curvature in the longitudinal direction Rmin, whereas it traverses between the pulleys 1 and 2 following an essentially straight trajectory. This type of transmission and its operation are well known in the art.

Figure 2 is a cross section of the drive belt 3 as seen in longitudinal direction. The figure shows a front elevation of a transverse element 20, and a cross section of the carrier 10, which in this embodiment of the drive belt 3 is shown to comprise two parts that each comprise a number of 'nested', i.e. radially stacked, continuous bands 11 mounted in a respective recess or slot 24 in the element 20. Each such slot 24 is provided on and opens towards a lateral side of the element 20 in-between an effectively trapezoid-shaped lower part 23 and a an effectively arrow-head shaped upper part 21 of the element 20. These upper and lower parts 21, 23 are interconnected via a central pillar part 22 of the element 20. The elements 20 arrives into contact with the pulleys 1 and 2 during operation of the transmission through lateral contact surfaces 21. As is indicated in figure 2, the carrier parts 10 are provided in the slots 24 with some radial play, i.e. the radial height Sh of the slots 23 is somewhat larger than the radial height or thickness Tc of the carrier parts 10.

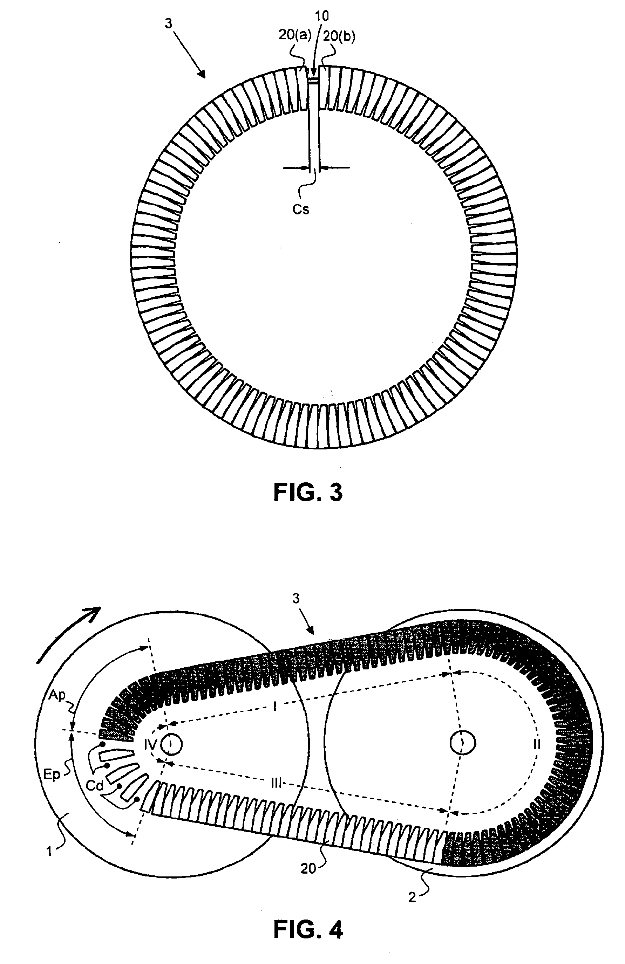

Figure 3 provides a schematic side elevation of the drive belt 3 placed in a circular posture and illustrates the feature of static longitudinal belt clearance Cs. Such static clearance Cs may be defined as the width of a gap that exists between the two adjacent transverse elements 20(a) and 20(b) when all of the transverse elements 20 of the belt 3 are mutually abutting in a continuous, essentially circular array. A certain amount of static clearance Cs is generally provided to allow the drive belt to be assembled without difficulty. It may also result from wear of, in particular, the transverse elements 20 during operation of the transmission. Moreover, the so-called dynamic clearance Cd that actually occurs between the elements 20 during operation varies in dependency on the exact posture of the belt 3 in the transmission, i.e. on the geometric transmission ratio, as well as the load applied thereto.

Figure 4 provides a simplified axial cross section the transmission of figure 1, indicating the four main trajectory parts of the drive belt 3, i.e. a longitudinally bent part I at the location of the drive pulley 1, a taut straight part II, wherein the transverse elements 20 of the belt 3 are transported from the drive pulley 1 to the driven pulley 2, a further longitudinally bent part III at the location of the driven pulley 2 and a slack straight part IV, wherein the elements 20 are returned from the driven pulley 2 to the drive pulley 1. Hereby, the curved arrow at the drive pulley 1 indicates the direction of rotation thereof. The transverse elements 20 that are shaded in grey are subjected to a relatively high push force during operation of the transmission, which force effectively pushes the elements from the drive pulley 1 to driven pulley 2, whereas between the other elements 20 of the belt 3 that are returning from the driven pulley 2 to the drive 1 relatively little force is exerted.

Still, because of pulley deformation during operation the transverse elements 20 experience a resistance when entering the drive pulley 1, i.e. arrive into frictional contact with the discs thereof. To overcome this entry resistance at least some compressive force has to be build-up between the transverse elements 20 at this location in this slack straight part IV, whereby a continuous array or string of elements is formed also in this trajectory part. As a result hereof, the dynamic clearance Cd tends to accumulate between the transverse elements 20 that are located in a first or entry part Ep of the longitudinally bent part I on the drive pulley 1, which phenomenon is illustrated in figure 4.

This means that relatively few transverse elements 20 remain available on the drive pulley 1 for the build-up of the push force in the belt 3, which elements 20 form the so-called compression part Cp of the longitudinally bent part I on the drive pulley 1. The clearance Cd that still exists between the elements 20 in the entry part Ep is removed by the elements in the compression part Cp slipping backwards relative to the rotational movement of the drive pulley 1. Apart from adversely affecting the transmission efficiency, this phenomenon also causes the clamping force applied by the discs of the drive pulley 1 onto the elements 20 to be relatively and disadvantageously high, since only this latter part Cp is available for force transfer between drive pulley 1 and belt 3.

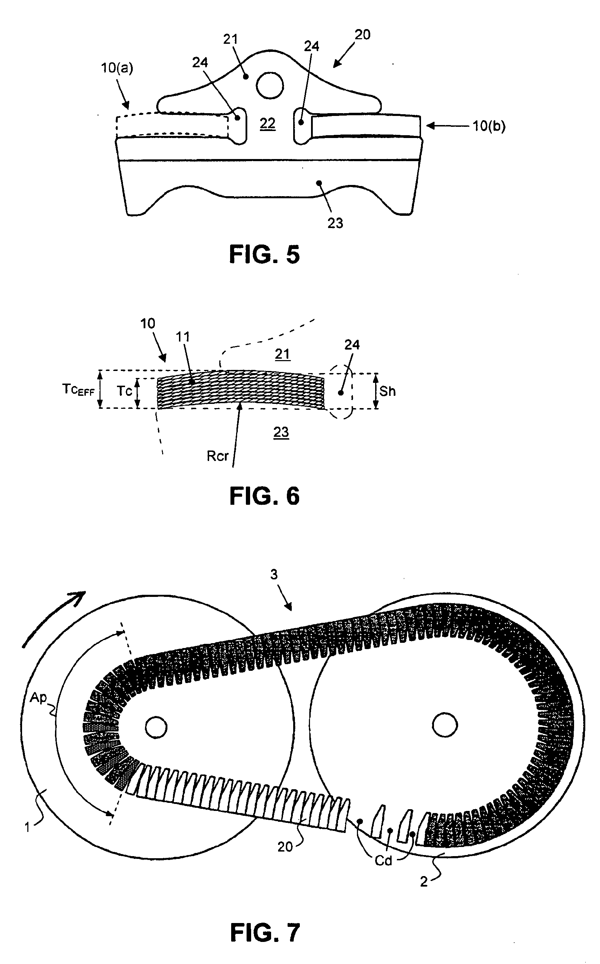

Accordingly, it would be advantageous to limit the extent of the entry part Ep on the drive pulley 1, where there exists a longitudinal clearance Cd between the elements, and preferably to eliminate its occurrence entirely. The invention realises such aim by accelerating forwards the transverse elements 20 as they leave the driven pulley 2, which is realised by wedging the carrier 10 between the upper and lower parts 21, 23 of the transverse elements 20 in the slack trajectory part III of the belt 3 as indicated in figure 5. Hereto, the design of the carrier 10 and that of the elements 20 of the belt 3 are mutually adapted such the slot height Sh has a value in-between the said actual thickness Tc of the carrier and an effective thickness $Tc_{EFF}$ thereof, the latter also being determined by the bands of the carrier being curved crosswise, i.e. transversely to their longitudinal direction.

Figure 5 provides a cross section of the drive belt 3 as seen in longitudinal direction similar to figure 2, however, with the belt 3 designed in accordance with the invention. The outer circumference of the left part 10(a) of the carrier 10 is indicated by the dashed lines as if it were free to assume its natural curved, arc-like cross-sectional shape defined by a crowning radius Rcr in a straight trajectory part of the belt 3, i.e. without being confined by the slot 24 of the transverse element 20. This natural, curved shape is shown in more detail in the enlargement of figure 6. Because of this crosswise curved shape the carrier 10 has an effective thickness $Tc_{EFF}$ as seen in radial direction that is somewhat larger than its actual thickness Tc. However, as is indicated in figure 5 by the right part 10(b) of the carrier 10, in reality the carrier 10 is wedged between the between the upper part 21 and the lower part 23 of the transverse element 20. Hereby, the said arc shape thereof allows the carrier 10 to be resiliently compressed. It is believed that this latter feature assists in transporting forwards in the direction of rotation the transverse elements 20 by accelerating them through friction with the carrier 10 as they leave the driven pulley 2, because at that location the longitudinal speed of the carrier 10 exceeds that of the elements 20 of the belt.

The effect of the above measure according to the invention is illustrated in figure 7 in an axial cross section the transmission similar to that of figure 4. It can be seen therein, that in the most extreme situation the transverse elements are accelerated away from the driven pulley 2 to such an extent that the entire dynamic clearance Cd is located between the elements that are just leaving the driven pulley 2, i.e. on the driven pulley 2 side of the slack trajectory part III. The above-mentioned entry resistance being overcome by these accelerated transverse elements 20 colliding against a string of elements 20 -thereby decelerating again- that is formed on the drive pulley side of the slack trajectory part III, as well as by a friction force exerted on these latter elements 20 by the carrier 10 due to the wedging effect.

Accordingly, in this example, no play between the elements 20 is present on the drive pulley 1 at all such that the entry part Ep is absent. Thus, the above-mentioned compression part Cp effectively covers the entire longitudinally bent part I on the drive pulley 1, whereby the effectiveness and efficiency of the transmission is improved.

**Claims**

1. A drive belt (3) for use in a continuously variable transmission comprising an endless carrier (10) composed of at least one stack of a number of continuous bands (11) at least one of which is curved crosswise, which curvature is defined by a crowning radius Rcr measured in a longitudinally straightened section of the band (11), and a plurality of transverse elements (20) that are movable along the circumference of the carrier (10), each of which comprises a lower part (23) located radially inside the carrier (10) and a upper part (21) located radially outside the carrier (10), where between a recess (24) having a radial height Sh is defined wherein the carrier (10) is mounted, **characterised in that**, an effective thickness $Tc_{EFF}$ of the carrier (10), which would be measured in radial direction outside the recess (24), is larger than the radial height Sh of the recess (24) of the transverse elements (20) of the belt (3), such that the carrier is in use resiliently compressed between the upper part (21) and the lower part (23) of the transverse element (20).

2. The drive belt (3) according to claim 1, **characterised in that**, the effective thickness $Tc_{EFF}$ is approximated by the equation:

$$Tc_{EFF} = Tc + Rcr - \tfrac{1}{2} \cdot \sqrt{4 \cdot Rcr^2 - B^2} \qquad (1)$$

wherein Tc is a nominal thickness of the carrier (10) determined by an average radial thickness of the individual bands (11) times the number of bands (11) applied in the carrier (10) and wherein B is an axial breadth of the bands (11).

3. The drive belt (3) according to claim 1 or 2, **characterised in that**, the radial height Sh satisfies the equation:

$$Sh \approx Tc + \tfrac{1}{2} \cdot (Rcr - \tfrac{1}{2} \cdot \sqrt{4 \cdot Rcr^2 - B^2}) \qquad (3)$$

4. The drive belt (3) according to any one of the preceding claims, **characterised in that**, a surface roughness of a radially outwardly oriented surface of the carrier (10) exceeds that of a radially inwardly oriented surface of the carrier (10).

5. The drive belt (3) according to any one of the preceding claims, **characterised in that**, a surface roughness of a radially inwardly oriented surface of the upper part (21) located above the recess (24) exceeds that of a radially outwardly oriented surface of the lower part (23) located below the recess (24).

6. The drive belt (3) according to any one of the preceding claims, **characterised in that**, a surface roughness of a radially outwardly oriented surface of the lower part (23) located below the recess (24) at the location of the lateral sides thereof exceeds that at the central parts thereof.

**Patentansprüche**

1. Treibriemen (3) zur Verwendung in einem stufenlosen Getriebe mit einem Endlosträger (10), der aus mindestens einem Stapel einer Anzahl von Endlosbändern (11) gebildet ist, von denen mindestens eines in einer Querrichtung gekrümmt ist, wobei die Krümmung durch einen in einem in Längsrichtung begradigten Abschnitt des Bands (11) gemessenen Balligkeitsradius Rcr definiert ist, und mit mehreren entlang dem Umfang des Trägers (10) beweglichen Querelementen (20), die jeweils einen radial im Träger (10) angeordneten unteren Teil (23) und einen radial außerhalb des Trägers (10) angeordneten oberen Teil (10) umfassen, zwischen denen eine Aussparung (24) mit einer radialen Höhe Sh definiert ist, worin der Träger (10) befestigt ist, **dadurch gekennzeichnet, dass** eine effektive Dicke $Tc_{EFF}$ des Trägers (10), die in Radialrichtung außerhalb der Aussparung (24) gemessen werden würde, größer als die radiale Höhe Sh der Aussparung (24) der Querelemente (20) des Riemens (3) ist, so dass der Träger im Gebrauch zwischen dem oberen Teil (21) und dem unteren Teil (23) des Querelements (20) elastisch komprimiert wird.

2. Treibriemen (3) nach Anspruch 1, **dadurch gekennzeichnet, dass** die effektive Dicke $Tc_{EFF}$ durch die folgende Gleichung angenähert wird:

$$Tc_{EFF} = Tc + Rcr - \tfrac{1}{2} \cdot \sqrt{4 \cdot Rcr^2 - B^2} \qquad (1)$$

wobei Tc eine Nenndicke des Trägers (10) ist, die durch Multiplikation einer durchschnittlichen radialen Dicke der einzelnen Bänder (11) mit der im Träger (10) verwendeten Anzahl an Bändern (11) bestimmt wird, und wobei B eine axiale Breite der Bänder (11) ist.

3. Treibriemen (3) nach Anspruch 1 oder 2, **dadurch gekennzeichnet, dass** die radiale Höhe Sh die folgende Gleichung erfüllt:

$$Sh \approx Tc + \tfrac{1}{2} \cdot (Rcr - \tfrac{1}{2} \cdot \sqrt{4 \cdot Rcr^2 - B^2}) \tag{3}$$

**4.** Treibriemen (3) nach einem der vorhergehenden Ansprüche, **dadurch gekennzeichnet, dass** eine Oberflächenrauigkeit einer radial nach außen gerichteten Fläche des Trägers (10) die einer radial nach innen gerichteten Fläche des Trägers (10) übertrifft.

**5.** Treibriemen (3) nach einem der vorhergehenden Ansprüche, **dadurch gekennzeichnet, dass** eine Oberflächenrauigkeit einer über der Aussparung (24) angeordneten radial nach innen gerichteten Fläche des oberen Teils (21) die einer unter der Aussparung (24) angeordneten radial nach außen gerichteten Fläche des unteren Teils (23) übertrifft.

**6.** Treibriemen (3) nach einem der vorhergehenden Ansprüche, **dadurch gekennzeichnet, dass** eine Oberflächenrauigkeit einer unter der Aussparung (24) angeordneten radial nach außen gerichteten Fläche des unteren Teils (23) an ihren lateralen Seiten die Oberflächenrauigkeit an ihren Mittelteilen übertrifft.

## Revendications

**1.** Courroie d'entraînement (3) destinée à être utilisée dans une transmission à variation continue comprenant un support sans fin (10) composé d'au moins un empilement d'un certain nombre de bandes continues (11) parmi lesquelles au moins une est incurvée dans le sens transversal, l'incurvation étant définie par un rayon de bombement Rcr mesuré dans une section redressée longitudinalement de la bande (11), et une pluralité d'éléments transversaux (20) qui sont mobiles le long de la circonférence du support (10), chacun d'entre eux comprenant une partie inférieure (23) située radialement à l'intérieur du support (10) et une partie supérieure (21) située radialement à l'extérieur du support (10), un évidement (24) présentant une hauteur radiale Sh, dans lequel est monté le support (10), étant défini entre celles-ci, **caractérisée en ce qu'**une épaisseur effective $Tc_{EFF}$ du support (10), qui serait mesurée dans la direction radiale à l'extérieur de l'évidement (24), est supérieure à la hauteur radiale Sh de l'évidement (24) des éléments transversaux (20) de la courroie (3), de telle sorte que le support est, lors de l'utilisation, comprimé de manière élastique entre la partie supérieure (21) et la partie inférieure (23) de l'élément transversal (20).

**2.** Courroie d'entraînement (3) selon la revendication 1, **caractérisée en ce que** l'épaisseur effective $Tc_{EFF}$ est obtenue par approximation au moyen de l'équation :

$$Tc_{EFF} = Tc + Rcr - \tfrac{1}{2} \cdot \sqrt{4 \cdot Rcr^2 - B^2} \tag{1}$$

Tc étant une épaisseur nominale du support (10) déterminée par une épaisseur radiale moyenne des bandes individuelles (11) multipliée par le nombre de bandes (11) incluses dans le support (10) et B étant une largeur axiale des bandes (11).

**3.** Courroie d'entraînement (3) selon la revendication 1 ou 2, **caractérisée en ce que** la hauteur radiale Sh vérifie l'équation :

$$Sh \approx Tc + \tfrac{1}{2} \cdot (Rcr - \tfrac{1}{2} \cdot \sqrt{4 \cdot Rcr^2 - B^2}) \tag{3}$$

**4.** Courroie d'entraînement (3) selon l'une quelconque des revendications précédentes, **caractérisée en ce qu'**une rugosité de surface d'une surface du support (10) orientée radialement vers l'extérieur est supérieure à celle d'une surface du support (10) orientée radialement vers l'intérieur.

**5.** Courroie d'entraînement (3) selon l'une quelconque des revendications précédentes, **caractérisée en ce qu'**une rugosité de surface d'une surface de la partie supérieure (21) orientée radialement vers l'intérieur située au-dessus de l'évidement (24) est supérieure à celle d'une surface de la partie inférieure (23) orientée radialement vers l'extérieur située en dessous de l'évidement (24).

6. Courroie d'entraînement (3) selon l'une quelconque des revendications précédentes, **caractérisée en ce qu'**une rugosité de surface d'une surface de la partie inférieure (23) orientée radialement vers l'extérieur située en dessous de l'évidement (24) au niveau des côtés latéraux de celle-ci est supérieure à la rugosité de surface au niveau des parties centrales de celle-ci.

**FIG. 1**

**FIG. 2**

**FIG. 3**

**FIG. 4**

**FIG. 5**

**FIG. 6**

**FIG. 7**

**EP 1 748 219 B1**

**Patent documents cited in the description**

- EP 1111271 A
- EP 1179690 A
- JP 63266247 A
- WO 9804847 A